# EUROPÄISCHE PATENTANMELDUNG

(11) **EP 1 571 609 A2**
(43) Veröffentlichungstag der Anmeldung: **07.09.2005**
(21) Anmeldenummer: 04008703.3
(22) Anmeldetag: 13.04.2004
(51) Int. Cl.: G07F 11/00, G07F 17/30

(54) **Musikautomat**

(30) Priorität: 04.03.2004 DE 202004003564 U
(71) Anmelder: Everest TV + Musik GmbH & Co. KG, 50997 Köln-Godorf (DE)
(72) Erfinder: Münchow, Karl-Heinz, 9210 Pörtschach/WS (AT)
(74) Vertreter: Lindner, Michael

(57) **Zusammenfassung**

Die vorliegende Erfindung betrifft eine autarke Vorrichtung zur Erstellung eines mobilen Musik-Datenträgers mit einer Archiv-Speichereinrichtung, auf der eine Vielzahl von Musikdaten abgelegt sind, einer Auswahleinrichtung zur Auswahl bestimmter Musikdaten aus der Vielzahl von Musikdaten, einer Bezahleinrichtung zur Bezahlung der ausgewählten Musikdaten, einer Schreibeinrichtung zum automatischen Schreiben der ausgewählten und bezahlten Musikdaten auf einen mobilen Datenträger, und einem Gehäuse, das die vorgenannten Einrichtungen aufnimmt.

## Beschreibung

Die vorliegende Erfindung betrifft eine autarke Vorrichtung zur Erstellung eines mobilen Musik-Datenträgers.

In jüngster Zeit etabliert sich in zunehmendem Maße der Kauf von Musiktiteln über das Internet. Hierfür stehen mittlerweile unterschiedliche Kaufplattformen zur Verfügung, die die Auswahl von Musiktiteln aus großen Musikarchiven ermöglichen. Die Musiktitel werden üblicherweise im sogenannten MP3-Format über das Internet auf den heimischen Rechner überspielt, wobei die Bezahlung im Allgemeinen per Kreditkarte erfolgt. Gerade für ältere Menschen, die mit den Möglichkeiten des Internets nicht sehr vertraut sind, ist der Kauf von Musiktiteln auf diesem Weg im Hinblick auf die Bedienung sehr kompliziert. Ältere Menschen werden deshalb diese Möglichkeit des Musiktitelkaufs nicht wählen und stattdessen den klassischen "Plattenladen" aufsuchen.

Der Fachhandel seinerseits kämpft bedingt durch den Onlinehandel jedoch gegen rückläufige Umsätze und ist damit nicht mehr in der Lage, größere "Platten"-Sortimente vorzuhalten. Der Kunde findet deshalb sehr häufig die gewünschten Musiktitel nicht im Sortiment, so dass der Händler eine Bestellung aufgeben muss. Dies ist jedoch mit weiterem Aufwand für den Kunden verbunden, da er nochmals den Händler aufsuchen muss, um seine Bestellung abzuholen.

Vor diesem Hintergrund besteht die Aufgabe der vorliegenden Erfindung darin, eine Vorrichtung zur Erstellung eines mobilen Musik-Datenträgers bereitzustellen, deren Bedienung einfach ist und darüber hinaus keinen Onlineanschluss benötigt, so dass sie überall einsetzbar ist.

Diese Aufgabe wird durch eine autarke Vorrichtung zur Erstellung eines mobilen Musikdatenträgers gelöst, die aufweist: eine Archiv-Speichereinrichtung auf der eine Vielzahl von Musikdaten abgelegt sind; eine Auswahleinrichtung zur Auswahl bestimmter Musikdaten aus der Vielzahl von Musikdaten; eine Bezahleinrichtung zur Bezahlung der ausgewählten Musikdaten; eine Schreibeeinrichtung zum automatischen Schreiben der ausgewählten und bezahlten Musikdaten auf einen mobilen Datenträger, und ein Gehäuse, das die vorgenannten Einrichtungen aufnimmt.

Diese erfindungsgemäße autarke Vorrichtung ist internetunabhängig, da die gesamten Musikdaten in einer im Gehäuse aufgenommenen Archiv-Speichereinrichtung gespeichert sind. Damit ist es nicht erforderlich, Musikdaten über das Internet downzuloaden. In diesem Zusammenhang sind unter Musikdaten jene digitalen Daten zu verstehen, die einem Musiktitel zugeordnet sind. D.h., dass eine Vielzahl von Musikdaten die elektronischen Daten einer Vielzahl von Musiktiteln ist.

Die erfindungsgemäße Vorrichtung ermöglicht das Auswählen von bestimmten Musiktiteln aus dem Archiv, die nach entsprechender Bezahlung auf einem mobilen Datenträger gespeichert werden. Der Benutzer kann dann diesen mobilen Datenträger aus der Vorrichtung entnehmen und zu Hause zum Abspielen der ausgewählten Musiktitel verwenden.

Es ist ersichtlich, dass die Bedienung damit sehr einfach ist, da der Benutzer lediglich seine Auswahl von Musiktiteln treffen und eine entsprechende Bezahlung vornehmen muss. Alles andere, was zur Erstellung eines mobilen Datenträgers erforderlich ist, übernimmt die erfindungsgemäße Vorrichtung automatisch.

Da die Einrichtungen in einem Gehäuse untergebracht sind, ist die gesamte Vorrichtung sehr kompakt und nimmt wenig Platz in Anspruch. Große Verkaufsflächen zum Anbieten von Platten sind damit nicht mehr erforderlich, was zu großen Kostenvorteilen führt. Darüber hinaus sind auf Grund der Internetunabhängigkeit keine Datenleitungsanschlüsse zum Betreiben der Vorrichtung erforderlich, so dass die erfindungsgemäße Vorrichtung letztlich überall aufgestellt werden kann; lediglich eine Spannungsversorgung muss vorhanden sein.

Die Auswahleinrichtung umfasst bevorzugt einen Bildschirm und eine Tastatur, um hierüber in einfacher Weise eine Auswahl von Musiktiteln treffen zu können. Selbstverständlich ist es auch denkbar, statt einem Bildschirm und einer Tastatur einen sogenannten Touch-Screen zu verwenden, der beide Baueinheiten quasi vereint.

In einer bevorzugten Ausführungsform beweist die Bezahleinrichtung eine Münzprüfeinrichtung auf.

Diese Maßnahme hat den Vorteil, dass die Bezahlung gerade für ältere Menschen leichter wird, da Scheck- oder Kreditkarten nicht notwendig werden. Darüber hinaus sind durch die Barbezahlung auch die Kosten für den Betreiber der Vorrichtung geringer.

Üblicherweise handelt es sich bei dem mobilen Musik-Datenträger um eine CD-ROM oder um eine DVD-ROM. Selbstverständlich wäre es auch denkbar, statt dieser optischen Speichermedien elektrische Speichermedien einzusetzen, wie bspw. Speicherkarten. Im Falle einer DVD ist es bspw. möglich, neben den Musikdaten auch Bilddaten, wie bspw. Videofilme zu speichern.

In einer bevorzugten Ausführungsform weist die Archiv-Speichereinrichtung zumindest eine Festplatte auf, die innerhalb des Gehäuses diebstahlsicher untergebracht ist. Darüber hinaus ist vorgesehen, dass sich die Daten selbst löschen, wenn die Festplatte trotz der Diebstahlsicherung entwendet wird.

D.h. mit anderen Worten, dass die Musikdaten auf einer oder mehreren Festplatten innerhalb des Gehäuses der Vorrichtung gespeichert sind. Da diese Musikdaten einen sehr großen Wert darstellen, ist die Festplatte innerhalb des Gehäuses so untergebracht, dass ein Diebstahl der Festplatte nicht möglich ist oder zumindest deren vollständige Löschung zur Folge hätte.

Um die Sicherheit weiter zu erhöhen ist es bevorzugt, der Archiv-Speichereinrichtung eine Entschlüsselungseinrichtung zuzuordnen. Damit können die Musikdaten verschlüsselt abgespeichert werden und vor dem Schreiben auf den mobilen Datenträger entschlüsselt werden. Selbst wenn damit die Archiv-Speichereinrichtung unbeschädigt aus dem Gehäuse entnommen würde, könnten die Musikdaten nicht benutzt werden, da sie verschlüsselt sind.

In einer bevorzugten Ausführungsform umfasst die Vorrichtung eine erste Druckeinrichtung, die die Erstellung einer Etikette für den Datenträger ermöglicht. Weiter ist es bevorzugt, eine zweite Druckeinrichtung vorzusehen, die eine Quittung über den Kauf von Musiktiteln ausstellt.

In einer weiteren bevorzugten Ausführungsform ist eine Musikdaten-Lizenzabrechnungseinrichtung vorgesehen, um eine Lizenzabrechnung für die ausgewählten und bezahlten Musikdaten zu erstellen.

Diese Musikdaten-Lizenzabrechnungseinrichtung protokolliert die Kaufvorgänge, so dass eine Lizenzabrechnung auf Anforderung des Betreibers oder in regelmäßigen Abständen ausgedruckt oder alternativ auf einem Datenträger abgespeichert wird.

Nach einer bevorzugten Ausführungsform weist die Vorrichtung eine Update-Einrichtung auf, die der Archiv-Speichereinrichtung zugeordnet ist und ein Update der auf der Archiv-Speichereinrichtung abgelegten Musikdaten ermöglicht.

D.h. mit anderen Worten, dass der Benutzer das Musikarchiv jederzeit erweitern kann. Üblicherweise benutzt er hierfür eine CD oder eine DVD, die er der Update-Einrichtung zuführt.

In einer bevorzugten Ausführungsform weist die Vorrichtung eine Wiedergabeeinrichtung zur zumindest teilweisen Wiedergabe von ausgewählten Musikdaten auf, wobei die Wiedergabe wahlweise über Lautsprecher oder Kopfhörer erfolgt.

Diese Maßnahme hat den Vorteil, dass der Benutzer die Musiktitel kurz anspielen kann, um die Kaufentscheidung zu erleichtern.

In einer bevorzugten Ausführungsform ist eine Modemeinrichtung zum Empfang von Programmdaten über eine Telefonleitung, insbesondere eine ISDN-Telefonleitung vorgesehen.

Diese Maßnahme hat den Vorteil, dass die zum Betrieb der Vorrichtung erforderliche Software sehr leicht auf dem aktuellen Stand gehalten werden kann. Selbstverständlich wäre es auch denkbar, die Aktualisierungen (Updates) der Software über Datenträger (CD-ROM, DVD) einzuspielen.

In einer bevorzugten Weiterbildung weist die Vorrichtung eine Barcode-Leseeinrichtung auf, die der Auswahleinrichtung zugeordnet ist und die Auswahl von Musikdaten anhand eines EAN-Codes ermöglicht.

Diese Maßnahme hat den Vorteil, dass die Bedienung weiter vereinfacht wird. Hierzu nutzt das System die bekannten EAN-Codes, die eine "Platte" eindeutig identifizieren. Hat der Benutzer der Vorrichtung bspw. den Wunsch, einen bestimmten Musiktitel auf einer Platte zu kaufen, muss er der Barcode-Leseeinrichtung lediglich den EAN-Code zuführen. Die auf dieser Platte enthaltenen Musiktitel werden dann automatisch dem Benutzer zur Auswahl angeboten und er kann anschließend sehr einfach den gewünschten Musiktitel auswählen.

In einer bevorzugten Ausführungsform weist das Gehäuse zumindest zwei Transportrollen auf, um einen Transport der Vorrichtung zu ermöglichen.

Diese Maßnahme hat den Vorteil, dass die Handhabung der erfindungsgemäßen Vorrichtung weiter vereinfacht wird. Insbesondere lässt sich die Vorrichtung sehr einfach umstellen.

In einer bevorzugten Ausführungsform weist die Vorrichtung eine Energieauswahl-Einrichtung auf, die dazu dient, die Auswahl- und Bezahldaten bei einem Stromausfall zu sichern.

D.h. mit anderen Worten, dass der Schreibvorgang auch nach einem Stromausfall fortgesetzt wird, so dass dem Benutzer in einem solchen Fall auch nach getätigter Bezahlung keine Nachteile erwachsen.

In einer bevorzugten Ausführungsform weist die Vorrichtung eine Handhabungseinrichtung auf, die die zu beschreibende CD bzw. DVD aus einem Vorrat entnimmt, der Schreibeinrichtung zuführt und nach dem Schreiben in ein von außen zugängliches Entnahmefach legt.

Diese Maßnahme hat den Vorteil, dass der Benutzer den Datenträger in Form einer CD oder DVD nicht selbst einlegen muss, sondern dass die erfindungsgemäße Vorrichtung vielmehr aus einem CD bzw. DVD Vorrat den entsprechenden Datenträger automatisch entnimmt. Die Bedienung wird damit weiter vereinfacht.

Weitere Vorteile und Ausgestaltungen der Erfindung ergeben sich aus der Beschreibung der beiliegenden Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand einer beispielhaften Ausführungsform unter zu Hilfenahme von Zeichnungen näher beschrieben. Dabei zeigen:
- Figur 1: eine schematische Darstellung einer erfindungsgemäßen Vorrichtung;
- Figur 2: ein schematisches Blockdiagramm der erfindungsgemäßen Vorrichtung; und
- Figur 3: eine schematische Darstellung einer Bildschirmmaske.

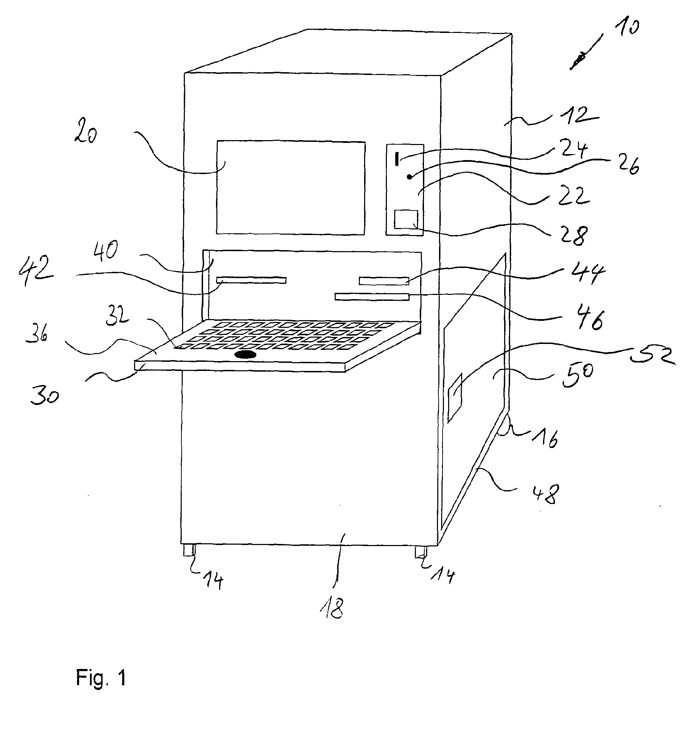

In Figur 1 ist eine erfindungsgemäße Vorrichtung, die nachfolgend als Musikautomat bezeichnet wird, in perspektivischer Ansicht schematisch dargestellt und mit dem Bezugszeichen 10 gekennzeichnet. Der Musikautomat 10 umfasst ein Gehäuse 12, das im vorliegenden Fall quaderförmig aufgebaut ist und metallene Wände, vorzugsweise aus Edelstahl oder Leichtmetall, besitzt. Das Gehäuse 12 besitzt an seiner Unterseite zwei Füße 14 an der Vorderseite und zwei Transportrollen 16 an der Hinterseite, wobei in Figur 1 lediglich eine Transportrolle zu sehen ist. Zusätzlich ist an der Rückseite des Gehäuses 12 ein Transportgriff angebracht, der ein Kippen des Gehäuses und damit des gesamten Musikautomaten 10 erleichtert und den Transport über die beiden Transportrollen 16 ermöglicht.

An der Vorderseite 18 des Gehäuses 12 ist im oberen Bereich ein Bildschirm 20 vorgesehen, der üblicherweise von außen über eine transparente Schutzplatte geschützt ist.

Rechts neben dem Bildschirm 20 ist eine Münzeinwerfeinheit 22 angeordnet, die einen Münzschlitz 24, einen Rückgabeknopf 26 und eine Münzauswurföffnung 28 besitzt.

Unterhalb des Bildschirms 20 ist eine Tastatur 30 angebracht, die alle zur Bedienung des Musikautomaten erforderlichen Tasten 32 umfasst.

Die Tastatur 30 ist in einem aus Edelstahl gefertigtem Gehäuse 36 untergebracht, das sich nach oben klappen lässt. Das Gehäuse 36 verschwindet im eingeklappten Zustand in einer im Gehäuse vorgesehenen Öffnung 40 zumindest teilweise.

In der Öffnung 40 ist ein CD- bzw. DVD-Schlitz 42 vorgesehen, der zur Ausgabe einer CD bzw. DVD dient. Benachbart zu diesem Schlitz 42 sind zwei weitere Öffnungen 44 und 46 vorgesehen, die der Ausgabe von Quittungen bzw. bedruckten CD Covers dienen.

An einer Seitenwand 48 des Gehäuses 12 ist eine Tür 50 vorgesehen, um den Innenraum des Gehäuses 12 erreichen zu können. Die Tür 50 selbst ist über ein Codeschloss 52 gegen unbefugtes Öffnen gesichert. Mit Hilfe der Tür 50 ist es bspw. möglich, einen im Inneren des Gehäuses 12 liegenden Münzbehälter zu erreichen und zu entleeren.

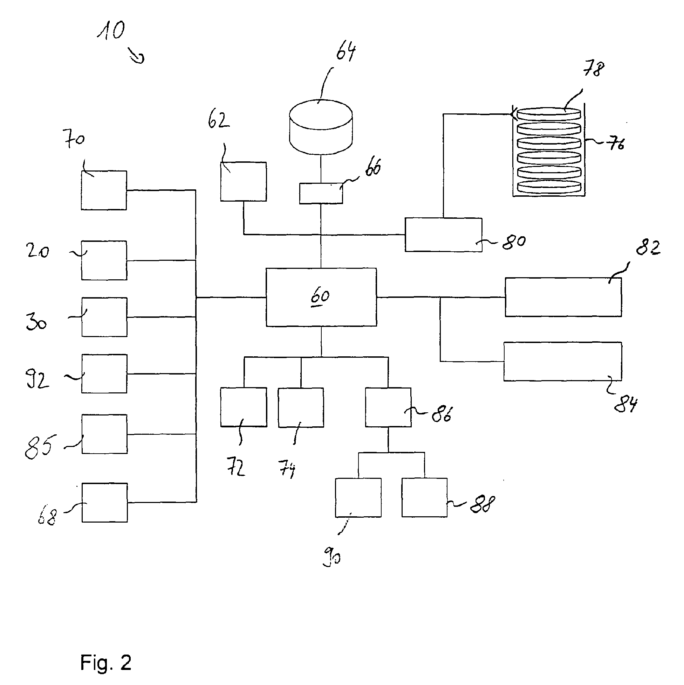

Der funktionale Aufbau des Musikautomaten 10 wird nun anhand des Blockdiagramms von Figur 2 näher erläutert.

Der Musikautomat 10 umfasst eine zentrale Steuereinrichtung 60, bspw. in Form eines Mikroprozessors. Der zentralen Steuereinrichtung 60 ist ein Programmspeicher 62 zugeordnet, der die zum Betrieb des Musikautomaten 10 erforderlichen Programme speichert. Neben dem Programmspeicher 62 ist ein Archivspeicher 64 vorgesehen, der in Form einer oder mehrerer Festplatten ausgeführt ist. Der Archivspeicher 64 dient dazu, die digitalen Daten einer Vielzahl von Musiktiteln in einem bestimmten Format, bspw. dem "WAV"-Format oder einem komprimierten "MP3"-Format zu speichern. Der Archivspeicher 64 wird von der zentralen Steuereinrichtung 60 gesteuert, wobei die von der Archiv-Speichereinrichtung 64 abgerufenen Musikdaten über eine Entschlüsselungseinrichtung 66 laufen. Diese Entschlüsselungseinrichtung 66 entschlüsselt die aus Sicherheitsgründen verschlüsselt auf dem Archiv-Speicher abgelegten Musikdaten auf der Grundlage eines von außen nicht abfragbaren geheimen Schlüssels.

Da die im Archiv-Speicher 64 abgelegten Musikdaten verschlüsselt sind, kann selbst bei einem Diebstahl des Archiv-Speichers 64 eine Verwertung der darauf abgelegten Musikdaten nicht erfolgen. Der eingesetzte Schlüssel zur Ver- bzw. Entschlüsselung der Musikdaten kann von Musikautomat zu Musikautomat unterschiedlich sein. Selbstverständlich ist es auch möglich, für alle Musikautomaten einen einzigen geheimen Schlüssel einzusetzen.

Die zentrale Steuereinrichtung ist mit einem Monitor bzw. Bildschirm 20 verbunden, der zur Darstellung von Informationen und Auswahlmenüs dient. Zur Eingabe von Informationen bzw. zur Durchführung einer Auswahl ist die Tastatur 30 vorgesehen und mit der zentralen Steuereinrichtung 60 verbunden. Mit Hilfe der Tastatur lässt sich unter anderem ein Cursor bzw. eine Auswahlmarkierung auf dem Bildschirm 20 bewegen.

Als weiteres Eingabegerät ist ein Barcode-Leser 68 vorgesehen und mit der zentralen Steuereinrichtung 60 verbunden. Der Barcode-Leser 68 ist im Bereich der Tastatur angebracht und dient dazu, sogenannte EAN-Codes zu lesen. Bei Bedarf kann der Barcode-Leser 68 Teil der Tastatur 30 sein, d.h. in das Gehäuse 36 integriert sein.

Die zentrale Steuereinrichtung 60 ist ferner mit einer Münzprüfeinrichtung 70 verbunden, die in an sich bekannter Weise eingeworfene Münzen prüft und entsprechende Signale an die zentrale Steuereinrichtung 60 weitergibt.

Der Musikautomat 10 weist des Weiteren einen Coverdrucker 72 auf, der in der Lage ist, Covers für CDs oder DVDs zu bedrucken, sowie einen Quittungsdrucker 74, der in der Lage ist, eine genaue Quittung über den vorgenommenen Kauf von Musikdaten zu erstellen. Beide Drucker 72, 74 werden über die zentrale Steuereinrichtung 60 angesteuert.

Der Musikautomat 10 enthält einen Vorratsbehälter 76, der mit beschreibbaren CD- bzw. DVD-Rohlingen 78 gefüllt ist. Die Rohlinge 78 werden gesteuert von der zentralen Steuereinrichtung 60 mittels einer automatischen Handhabungseinrichtung 80 aus den Behältern 76 entnommen und einem CD- bzw. DVD-Brenner 82 zugeführt. Der Brenner 82 wird ebenfalls über die zentrale Steuereinrichtung 60 betrieben und empfängt von dieser auch die zu schreibenden Daten.

Neben dem Brenner 82 ist ein CD- bzw. DVD-Leser 84 vorgesehen, der bspw. dem Einspielen von Updates dient. Der CD- bzw. DVD-Leser 84 ist üblicherweise innerhalb des Gehäuses im Bereich der Tür 50 vorgesehen, so dass er nur nach Öffnen der Tür erreicht werden kann. Selbstverständlich wäre es alternativ auch möglich, den Brenner 82 und den Leser 84 als ein Gerät vorzusehen.

Zum Anhören von ausgewählten Musikdaten ist eine Wiedergabeeinrichtung 85 vorgesehen, die einen Verstärker und Lautsprecher aufweist. Zusätzlich kann ein Anschluss für einen Kopfhörer vorhanden sein.

Schließlich weist der Musikautomat 10 eine Lizenzabrechnungseinrichtung 86 auf, die dazu dient, detailliert Protokoll über die erworbenen Musiktitel zu führen. Die protokollierten Daten werden entweder in einem Speicher 88 fälschungssicher abgelegt und auf einem mobilen Datenträger, wie CD oder DVD, gespeichert, oder mittels eines Druckers 90 ausgedruckt. Selbstverständlich wäre es auch denkbar, statt des Druckers 90 einen der beiden Drucker 72 oder 74 zum Ausdruck des Protokolls zu verwenden. Bei der Protokollierung ist auf jeden Fall darauf zu achten, dass die Daten gegenüber Manipulationen und Veränderungen von außen geschützt sind, da sie Grundlage für eine spätere Abrechnung sind.

Alternativ wäre es auch denkbar, die Protokolldaten mit Hilfe eines Modems 92, das über die zentrale Steuereinrichtung 60 betrieben wird, an eine Abrechnungsstelle per Telefonleitung zu übermitteln. Mit Hilfe des Modems 92 könnten darüber hinaus Software Updates oder Updates der Musikdaten eingespielt werden.

Am Ende sei noch angemerkt, dass die zentrale Steuereinrichtung 60 unter einem Betriebssystem läuft, das Manipulationen von außen nicht zulässt. Insbesondere soll das verwendete Betriebssystem verhindern, dass auf die Musikdaten unberechtigt zugegriffen werden kann.

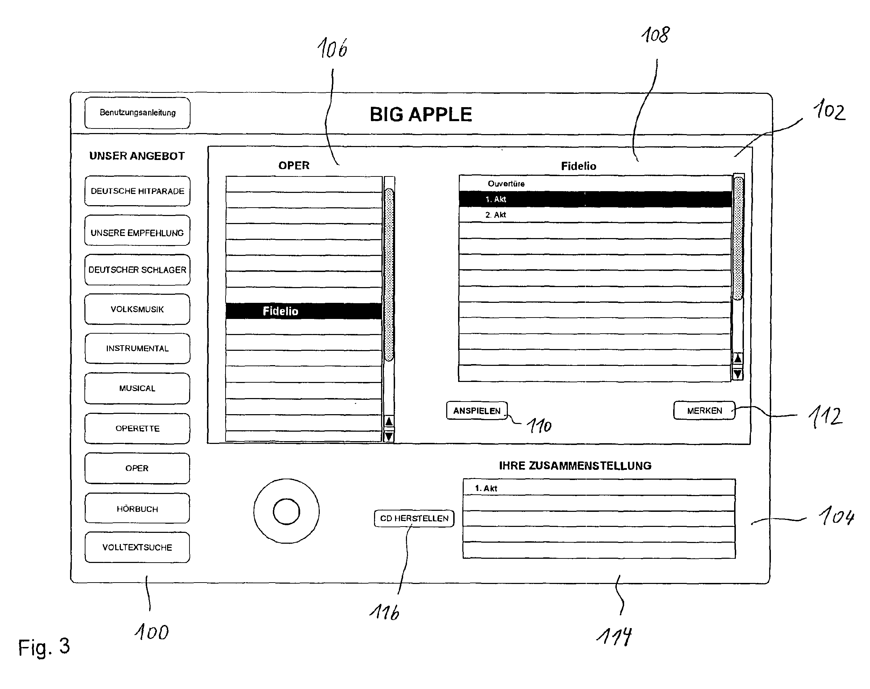

Die Funktionsweise des Musikautomaten 10 wird nun anhand der Figur 3 näher erläutert.

In Figur 3 ist das Auswahlmenü dargestellt, dass beim Betrieb des Musikautomaten 10 zu Beginn auf dem Bildschirm 20 erscheint. Das Auswahlmenü gliedert sich in mehrere Menübereiche 100, 102 und 104. Im Menübereich 100 sind mehrere (hier insgesamt 10) Kategorien zur Auswahl angeboten. Diese Musik-Kategorien umfassen Deutsche Hitparade, Unsere Empfehlung, Deutscher Schlager, Volksmusik, Instrumental, Musical, Operette, Oper, Hörbuch, Volltextsuche. Mit Hilfe dieser Menüpunkte kann eine erste Vorauswahl getroffen werden.

Im Menübereich 102 wird auf der linken Seite in einem Feld 106 die vorhandenen Interpreten zu der getroffenen Vorauswahl dargestellt und im benachbarten Feld 108 die im Archiv-Speicher zu einem bestimmten Interpreten vorhandenen Musiktitel.

Im Menübereich 102 sind ferner zwei Menüpunkte 110, 112 vorhanden, mit denen es möglich ist, einen ausgewählten Titel anzuspielen 110 oder den ausgewählten Musiktitel in eine Wunschliste zu übernehmen 112.

Im Menübereich 104 ist eine mit "Ihre Zusammenstellung" betitelte Liste 114 dargestellt, in der die über den Menüpunkt 112 ausgewählten Musiktitel angezeigt werden.

Schließlich ist im Menübereich 104 ein Menüpunkt "CD herstellen" 116 vorgesehen. Ein Auswählen dieses Menüpunktes 116 startet das Beschreiben eines CD- bzw. DVD-Rohlings mit den in der Liste 114 angegebenen Musiktiteln.

Weitere Informationen werden auf dem Bildschirm 20 dargestellt, die aus Übersichtlichkeitsgründen jedoch nicht dargestellt sind. So wird bspw. im Menübereich 104 die Gesamt-Spielzeit der ausgewählten Musiktitel angezeigt.

Möchte ein Benutzer nun eine CD erstellen, geht er wie folgt vor:

Zunächst trifft er eine Vorauswahl, indem er einen der im Bereich 100 angegebenen Menüpunkte auswählt. Für die Auswahl steht ihm die Tastatur 30 zur Verfügung. Im vorliegenden Ausführungsbeispiel sei angenommen, dass die Vorauswahl "Oper" getroffen wurde.

Dann erscheinen in der Liste 106 die der Kategorie Oper zugeordneten Opern. Der Benutzer kann nun die gewünschte Oper aus der Liste, hier "Fidelio" auswählen, indem er wiederum die Tastatur verwendet. Nach Auswahl einer Oper erscheinen in der Liste 108 die zu "Fidelio" im Archiv-Speicher vorhandenen Musiktitel. Der Einfachheit wegen sind im vorliegenden Ausführungsbeispiel lediglich zwei Titel angezeigt.

Der Benutzer hat nun die Möglichkeit, einen der angezeigten Musiktitel auszuwählen und durch Aktivierung des Menüpunkts "Anspielen" kurz anzuhören. Möchte er diesen Musiktitel auf der CD haben, muss er den Menüpunkt "Merken" 112 aktivieren. Damit landet der ausgewählte Musiktitel in der Liste "Ihre Zusammenstellung" 114. Der vorbeschriebene Vorgang kann nun so lange wiederholt werden, bis die Aufnahmekapazität der CD bzw. der DVD erschöpft ist. Es ist so insbesondere möglich, Musiktitel nicht nur von einer einem Komponisten bzw. Interpreten oder einer Kategorie in die Wunschliste aufzunehmen.

Sobald der Benutzer die Auswahl von Musiktiteln abgeschlossen hat, muss er den Menüpunkt "CD herstellen" 116 aktivieren. Anschließend wird ihm auf dem Bildschirm angezeigt, welchen Geldbetrag er bezahlen muss. Die entsprechenden Münzen hat er dann in den Münzschlitz 24 einzuwerfen. Sobald der angezeigte Betrag erreicht ist, wird die Erstellung der CD bzw. DVD vorgenommen. Hierfür wird über die Handhabungseinrichtung aus dem Behälter 76 ein CD-Rohling 78 entnommen und in den Brenner 82 eingelegt. Die zu den ausgewählten Musiktiteln gehörenden Musikdaten werden von der zentralen Steuereinrichtung 60 dann aus der Archiv-Speichereinrichtung 64 ausgelesen und dem Brenner 82 zugeführt. Sobald der Schreibvorgang beendet ist, wird die fertiggestellte CD ausgeworfen, so dass der Benutzer diese aus dem Musikautomaten entnehmen kann. Zusätzlich wird ein Cover erstellt, auf dem die ausgewählten Musiktitel gedruckt sind. Dieses Cover lässt sich in die CD-Hülle einlegen. Darüber hinaus erhält der Benutzer eine Quittung, in der detailliert ausgewiesen ist, welche Musiktitel er bezahlt hat.

Schließlich wird über die Lizenzabrechnungseinrichtung 86 detailliert protokolliert, welche Titel gekauft wurden, so dass zu einem späteren Zeitpunkt eine genaue Lizenzabrechnung mit dem Betreiber des Musikautomaten 10 erfolgen kann.

An dieser Stelle sei noch angemerkt, dass der Benutzer natürlich jederzeit bereits ausgewählte und in der Liste 114 angezeigte Musiktitel wieder löschen kann. Darüber hinaus kann er vor dem Erstellen einer CD die Reihenfolge der ausgewählten Musiktitel beliebig ändern. Aus Übersichtlichkeitsgründen sind die hierfür vorgesehenen Menüpunkte nicht dargestellt.

Sofern der Musikautomat mit einem Barcode-Leser 68 ausgestattet ist, kann der Benutzer sehr schnell einen Musiktitel von einer bestimmte CD finden, indem er dem Barcode-Leser den entsprechenden EAN-Code zuführt. In diesem Fall würden alle auf dieser entsprechenden CD enthaltenen Musiktitel in der Liste 108 erscheinen. Der Benutzer muss dann lediglich noch den gesuchten Musiktitel auswählen und in die Liste "Ihre Zusammenstellung" 114 aufnehmen.

Schließlich sei noch auf den Menüpunkt "Benutzungsanleitung" hingewiesen, über den der Benutzer eine genaue Benutzungsanleitung aufrufen kann.

Am Ende ist noch darauf hinzuweisen, dass das Ausführungsbeispiel das Erstellen einer Musik-CD beschreibt. Selbstverständlich ist es auch denkbar, dass die erfindungsgemäße Vorrichtung eine DVD erstellt, die neben den Musikdaten auch Bilddaten enthält, wie bspw. Videofilme etc..

Es zeigt sich somit, dass es mit Hilfe des Musikautomaten 10 auch für einen computerungeübten Benutzer leicht möglich ist, eine individuelle CD- bzw. DVD-ROM zu erstellen. Da der Musikautomat 10 lediglich eine Energieversorgung, jedoch keinerlei Datenverbindungen benötigt, kann er an nahezu beliebigen Orten aufgestellt werden.

## Patentansprüche

1. Autarke Vorrichtung zur Erstellung eines mobilen Musik-Datenträgers mit
- einer Archiv-Speichereinrichtung, auf der eine Vielzahl von Musikdaten abgelegt sind;
- einer Auswahleinrichtung zur Auswahl bestimmter Musikdaten aus der Vielzahl von Musikdaten;
- einer Bezahleinrichtung zur Bezahlung der ausgewählten Musikdaten;
- einer Schreibeinrichtung zum automatischen Schreiben der ausgewählten und bezahlten Musikdaten auf einen mobilen Datenträger, und
- einem Gehäuse, das die vorgenannten Einrichtungen aufnimmt.

2. Vorrichtung nach Anspruch 1, **dadurch gekennzeichnet, dass** die Auswahleinrichtung einen Bildschirm und eine Tastatur umfasst.

3. Vorrichtung nach Anspruch 1 oder 2, **dadurch gekennzeichnet, dass** die Bezahleinrichtung eine Münzprüfeinrichtung aufweist.

4. Vorrichtung nach einem der Ansprüche 1 bis 3, **dadurch gekennzeichnet, dass** die Schreibeinrichtung einen CD-oder DVD-Brenner aufweist und der mobile Datenträger eine CD bzw. eine DVD ist.

5. Vorrichtung nach einem der vorhergehenden Ansprüche, **dadurch gekennzeichnet, dass** die Archiv-Speichereinrichtung zumindest eine Festplatte aufweist, wobei die Festplatte innerhalb des Gehäuses diebstahlsicher untergebracht ist.

6. Vorrichtung nach einem der vorhergehenden Ansprüche, **dadurch gekennzeichnet, dass** der Archiv-Speichereinrichtung eine Entschlüsselungseinrichtung zugeordnet ist, um die verschlüsselt abgelegten Musikdaten vor dem Schreiben auf den mobilen Datenträger zu entschlüsseln.

7. Vorrichtung nach einem der vorhergehenden Ansprüche, **gekennzeichnet durch** eine erste Druckeinrichtung zur Erstellung eines Covers für den Datenträger.

8. Vorrichtung nach einem der vorhergehenden Ansprüche, **gekennzeichnet durch** eine zweite Druckeinrichtung zur Erstellung einer Quittung.

9. Vorrichtung nach einem der vorhergehenden Ansprüche, **gekennzeichnet durch** eine Musikdaten-Lizenzabrechnungseinrichtung zum Erstellen einer Lizenzabrechnung über die ausgewählten und bezahlten Musikdaten.

10. Vorrichtung nach einem der vorhergehenden Ansprüche, **gekennzeichnet durch** eine Update-Einrichtung, die der Archiv-Speichereinrichtung zugeordnet ist und ein Update der auf der Archiv-Speichereinrichtung abgelegten Musikdaten ermöglicht.

11. Vorrichtung nach einem der vorhergehenden Ansprüche, **gekennzeichnet durch** eine Wiedergabeeinrichtung zur teilweisen Wiedergabe von ausgewählten Musikdaten, wobei die Wiedergabe wahlweise über Lautsprecher oder Kopfhörer erfolgt.

12. Vorrichtung nach einem der vorhergehenden Ansprüche, **gekennzeichnet durch** eine Modemeinrichtung zum Empfang und zum Senden von Daten, insbesondere Programm-Daten über eine Telefonleitung, insbesondere eine ISDN-Telefonleitung.

13. Vorrichtung nach einem der vorhergehenden Ansprüche, **gekennzeichnet durch** eine Barcode-Leseeinrichtung, die der Auswahleinrichtung zugeordnet ist und die Auswahl von Musikdaten anhand eines EAN-Codes ermöglicht.

14. Vorrichtung nach einem der vorhergehenden Ansprüche, **dadurch gekennzeichnet, dass** das Gehäuse zumindest zwei Transportrollen aufweist, um einen Rolltransport der Vorrichtung zu ermöglichen.

15. Vorrichtung nach einem der vorhergehenden Ansprüche, **gekennzeichnet durch** eine Energieausfall-Schutzeinrichtung zur Sicherung der Auswahl- und Bezahldaten bei einem Stromausfall.

16. Vorrichtung nach Anspruch 3, **dadurch gekennzeichnet, dass** das Münzprüfgerät einen Münzbehälter aufweist, der von außen mit einem Codeschloss gegen Öffnen geschützt ist.

17. Vorrichtung nach Anspruch 4, **gekennzeichnet durch** eine Handhabungseinrichtung, die die zu beschreibende CD bzw. DVD aus einem Vorrat entnimmt, der Schreibeinrichtung zuführt und nach dem Schreiben in ein von außen zugängliches Entnahmefach legt.

18. Vorrichtung nach einem der vorhergehenden Ansprüche, **dadurch gekennzeichnet, dass** auf der Archiv-Speichereinrichtung neben den Musikdaten auch Bilddaten abgelegt sind, die über die Auswahleinrichtung auswählbar sind, um auf den mobilen Datenträger geschrieben zu werden..
